# EUROPÄISCHE PATENTSCHRIFT

(11) **EP 2 705 965 B1**
(45) Veröffentlichungstag und Bekanntmachung des Hinweises auf die Patenterteilung: **23.01.2019**
(21) Anmeldenummer: 13173779.3
(22) Anmeldetag: 26.06.2013
(51) Int. Cl.: B60J 7/16

(54) **Fahrerkabine eines landwirtschaftlichen Fahrzeugs**
Driver's cab of an agricultural vehicle
Cabine de conducteur d'un véhicule agricole

(30) Priorität: 07.09.2012 DE 102012108312
(43) Veröffentlichungstag der Anmeldung: 12.03.2014
(73) Patentinhaber: CLAAS Tractor SAS, 78141 Velizy-Villacoublay (FR)
(72) Erfinder: Faure, Yannick, 92100 Boulogne-Billancourt (FR)
(74) Vertreter: CLAAS Gruppe

(56) Entgegenhaltungen:
- EP-B1- 1 288 044
- GB-A- 320 242

## Beschreibung

Die Erfindung betrifft eine Fahrerkabine eines landwirtschaftlichen Fahrzeugs gemäß dem Oberbegriff des Anspruchs 1.

Landwirtschaftliche Fahrzeuge wie beispielsweise Traktoren sind üblicherweise mit einer Fahrerkabine ausgestattet. Zum Schutz des sich darin aufhaltenden Fahrers vor nachteiligen Einflüssen wie schlechter Witterung, Motorlärm, Fahrtwind, Verschmutzung und/oder ganz allgemein zur Gewährleistung der Betriebssicherheit sind diese Kabinen heute zumeist gegenüber der Umgebung abgeschlossen ausgebildet. Insbesondere weisen Fahrerkabinen dazu - schon aus Sicherheitsgründen - ein die Kabine nach oben hin abschließendes (Kabinen-) Dach auf. Neben der Versteifung der Kabinenstruktur und dem Schutz vor unkomfortablen Außeneinflüssen hat das Dach auch die Funktion, den Fahrer bei Unfällen zu schützen. Im Kollisionsfall des Fahrzeugs soll einerseits verhindert werden, dass der Fahrer aus der Kabine herausgeschleudert wird, andererseits dass gefährdende Gegenstände in die Kabine eindringen.

Damit der Fahrer beim Arbeitsbetrieb dennoch direkte Frischluft genießen kann - d.h. ohne Zuhilfenahme eines Lüftungssystems -, sind Fahrerkabinen optional mit einem sogenannten Sonnendach ausgestattet. In diesem Fall ist im Kabinendach eine Luke (Öffnung) ausgebildet, die mittels eines beweglich gegenüber dem Dach gelagerten Abdeckelements verschließbar ist. Nach Belieben kann die Luke geöffnet werden, um direkt Frischluft einströmen zu lassen, um warme oder feuchte Innenluft ausströmen zu lassen oder um Sicht nach oben zu ermöglichen (z.B. bei Arbeiten mit einem angebauten Frontlader). Insbesondere bei ungünstiger Witterung oder zum Betriebsende kann die Luke geschlossen werden, um Feuchtigkeitseintritt zu vermeiden oder um den Innenraum der Fahrerkabine insgesamt unzugänglich zu machen (Diebstahlschutz).

In der EP 1 288 044 B1 wird eine Dachlukenabdeckung für eine Fahrerkabine beschrieben, wobei sowohl ein Fensterelement als auch eine Blende um eine gemeinsame Achse schwenkbar mit dem Dach verbunden sind. Zur Verbindung mit dem Dach dienende Scharniere sind oberhalb des Dachs angeordnet, wodurch sich eine dachfeste Schwenkachse für Blende und Fensterelement ergibt.

Nachteilig an dieser Ausführung ist, dass die Scharniere weitestgehend der Witterung ausgesetzt sind, wodurch deren Korrision erhöht ist. Weiterhin entsteht bei jedem Öffnungs- bzw. Schließvorgang eine relativ hohe Reibung im Bereich gegenseitiger Dichtungsflächen von Fenster bzw. Blende gegenüber dem Dach. Diese Reibung ist bedingt durch eine konstruktionsbedingt lange Relativbewegung des Fensters bzw. der Blende parallel zur Dichtungsfläche bei sehr kleinen Öffnungswinkeln und führt zu einem erhöhten Dichtungsverschleiß oder kann ein Verrutschen von Dichtungselementen vom Einbauort verursachen. Schließlich eignet sich die in EP 1 288 044 B1 beschriebene Bauweise nur zum frontseitigen Öffnen. Hohe Fahrgeschwindigkeiten bei frontseitig geöffnetem Sonnendach sind jedoch nicht gefahrlos und daher in vielen Ländern unzulässig.

Es ist daher Aufgabe der vorliegenden Erfindung, eine Fahrerkabine der eingangs genannten Art anzugeben, deren Sonnendach hinsichtlich Verschleißanfälligkeit und Verwendbarkeit verbessert ist.

Die genannte Aufgabe wird gelöst durch eine Fahrerkabine mit den Merkmalen des Patentanspruchs 1. Bei einer solchen Fahrerkabine ist erfindungsgemäß das Abdeckelement mittels eines Viergelenkmechanismus gegenüber dem Kabinendach gelagert.

Dabei wurde zunächst erkannt, dass die im Stand der Technik übliche einfache Schwenklagerung eines Abdeckelements die genannten Nachteile mit sich bringt. Erfindungsgemäß wurde weiterhin erkannt, dass sich durch eine andere Art der Lagerung des Abdeckelements gegenüber dem Dach Vorteile hinsichtlich Anbringbarkeit und Nutzbarkeit erzielen lassen, wenn nämlich statt eines einfachen Schwenkmechanismus ein Viergelenkmechanismus verwendet wird. In kinematischer Hinsicht weist das Abdeckelement dabei genau einen Freiheitsgrad auf und kann - eine geeignete Anordnung und Gestaltung der Gelenkglieder vorausgesetzt - auf einer solchen Bewegungsbahn geführt werden, dass das Abdeckelement beim Öffnen und Schließen der Luke stets in weitestgehend orthogonaler Richtung das Dach kontaktiert. Zwischen Dach und Abdeckelement vorhandene Dichtungselemente werden so geschont und verschleißen (und verrutschen) deutlich weniger. Aufzubringende Betätigungskräfte sind geringer, da weniger Reibung an Dichtungselementen zu überwinden ist. Da der Viergelenkmechanismus zweckmäßigerweise unterhalb des Abdeckelements angeordnet ist, tritt deutlich weniger witterungsbedingte Korrosion auf.

Ganz unabhängig von der Gestaltung des Viergelenkmechanismus - und der sich ergebenden Bewegungsbahn - ist gemäß einer zweckmäßigen Ausgestaltung der Erfindung das Abdeckelement zwischen einem die Luke verschließenden Schließzustand und einem die Luke freigebenden Öffnungszustand bewegbar.

Es kann sich bei dem Viergelenkmechanismus um einen beliebigen viergliedrigen Koppelmechanismus handeln. Die erfindungsgemäße Ausgestaltung sieht vor, dass der Viergelenkmechanismus ein erstes Glied und ein zweites Glied umfasst, wobei die ersten und zweiten Glieder jeweils mit deren dem Dach zugewandten Enden an voneinander beabstandeten Drehpunkten mit dem Dach verbunden sind, und mit deren dem Dach abgewandten Enden jeweils an voneinander beabstandeten Drehpunkten mit dem Abdeckelement verbunden sind.

Eine vorteilhafte Anordnung für einen solchen Viergelenkmechanismus ergibt sich, indem die ersten und zweiten Glieder im Schließzustand der Luke annähernd parallel zur Fläche des Dachs ausgerichtet sind, so dass das Abdeckelement beim Öffnen der Luke aus dem Schließzustand zunächst etwa orthogonal von der Fläche des Dachs abhebt.

Damit eine für den Einsatzzweck an einem landwirtschaftlichen Fahrzeug geeignete Bewegungsbahn des Abdeckelements entsteht, weisen das erste Glied und das zweite Glied erfindungsgemäß eine unterschiedliche Länge auf, so dass das Abdeckelement im verschlossenen Zustand etwa parallel zur Fläche des Dachs ausgerichtet ist und im geöffneten Zustand gegenüber der Fläche des Dachs geneigt ist.

Konstruktiv ließe sich ein Viergelenkmechanismus besonders günstig in den Dachaufbau integrieren, indem das Abdeckelement mittels zumindest einer Scharnieranordnung, die einen Viergelenkmechanismus aufweist, mit dem Dach verbunden ist. Der Viergelenkmechanismus entsteht in diesem Fall also durch Verwendung eines Scharniers, in welches eine entsprechende Mechanik integriert ist. Selbstverständlich können mehrere derartiger Scharniere parallel zum Einsatz kommen, um beispielsweise eine höhere Steifigkeit der Lagerung zu erzielen.

Eine vorteilhafte Weiterbildung der Erfindung sieht vor, dass die zumindest eine Scharnieranordnung derart unterhalb des Abdeckelements angeordnet ist, dass diese zumindest im Schließzustand der Luke durch das Abdeckelement vor Witterungseinflüssen geschützt ist.

Zur erhöhten Verwendbarkeit und insgesamt flexibleren Nutzbarkeit kann vorgesehen sein, dass die Scharnieranordnung in unterschiedlichen Positionen, insbesondere umkehrbar an dem Dach befestigbar ist. Durch unterschiedliche Befestigungspositionen der Scharnieranordnung ließe sich so auf einfache Weise beispielsweise deren Öffnungswinkel ändern, insbesondere um 180° umkehren oder um 90° bzw. 270° zur Seite drehen. Um ein einfaches An- und Umbauen zu ermöglichen bzw. ganz allgemein eine einfache Zugänglichkeit zur Mechanik zu schaffen, ist die Scharnieranordnung vorzugsweise von innerhalb der Fahrerkabine am Dach montierbar, insbesondere daran verschraubbar.

Das Abdeckelement weist in der Regel ein nicht unerhebliches Gewicht auf. Weiterhin können beim Fahrbetrieb - zusätzlich zur Gewichtskraft - nach oben oder unten gerichtete Beschleunigungskräfte auf das Abdeckelement wirken. Damit das Abdeckelement dabei nicht beschädigt wird und eine komfortable Bedienung für den Fahrer möglich ist, kann eine zwischen Dach und beweglichem Abdeckelement wirkende Stützeinrichtung vorgesehen sein die zum Aufbringen einer der Gewichtskraft des Abdeckelements entgegenwirkenden Stützkraft geeignet ist. Eine solche Stützeinrichtung erleichtert dem Fahrer insbesondere auch das Öffnen der Luke. Vorzugsweise umfasst diese eine Federanordnung, insbesondere eine Gasfederanordnung, beispielsweise im Sinne einer gasdruckbelasteten Zylinder-Kolbenanordnung.

Es kann sich bei dem Abdeckelement grundsätzlich um jedwede Art von Bauteil handeln, das im weiteren Sinne dem Schutz der Fahrerkabine und dem darin befindlichen Fahrer dient. Gemäß einer vorteilhaften Ausgestaltung ist das Abdeckelement zumindest teilweise aus lichtdurchlässigem Material, insbesondere aus Glas oder lichtdurchlässigem Kunststoff hergestellt. Damit wird auch bei geschlossener Luke ein zusätzlicher Lichteintritt in die Fahrerkabine erzielt.

Die Erfindung betrifft auch ein landwirtschaftliches Fahrzeug, insbesondere einen Traktor, das (bzw. der) mit einer Fahrerkabine der hier beschriebenen Art ausgestattet ist. Es sei angemerkt, dass auch andere landwirtschaftliche Fahrzeuge wie beispielsweise selbstfahrende Feldhäcksler oder Mähdrescher auf vorteilhafte Weise mit einer erfindungsgemäßen Fahrerkabine ausgestattet sein können.

Die Erfindung wird im Folgenden anhand von Fig. 1 bis 4 näher erläutert. Aus den Fig. ergeben sich auch weitere vorteilhafte Wirkungen und Effekte. In den Fig. zeigen:
- Fig. 1: eine schematische Seitenansicht eines Traktors mit einer erfindungsgemäßen Fahrerkabine,
- Fig. 2: das Dach der erfindungsgemäßen Fahrerkabine aus Fig. 1 im geschlossenen Zustand der Luke in perspektivischer Ansicht von schräg oben,
- Fig. 3: das Dach gemäß Fig. 2 im geöffneten Zustand der Luke in Seitenansicht von links, sowie eine Detaildarstellung eines darin eingebauten Scharniers,
- Fig. 4: das Dach ähnlich der Fig. 3 im geöffneten Zustand der Luke in Seitenansicht von links, jedoch mit umgekehrter Scharnieranordnung.

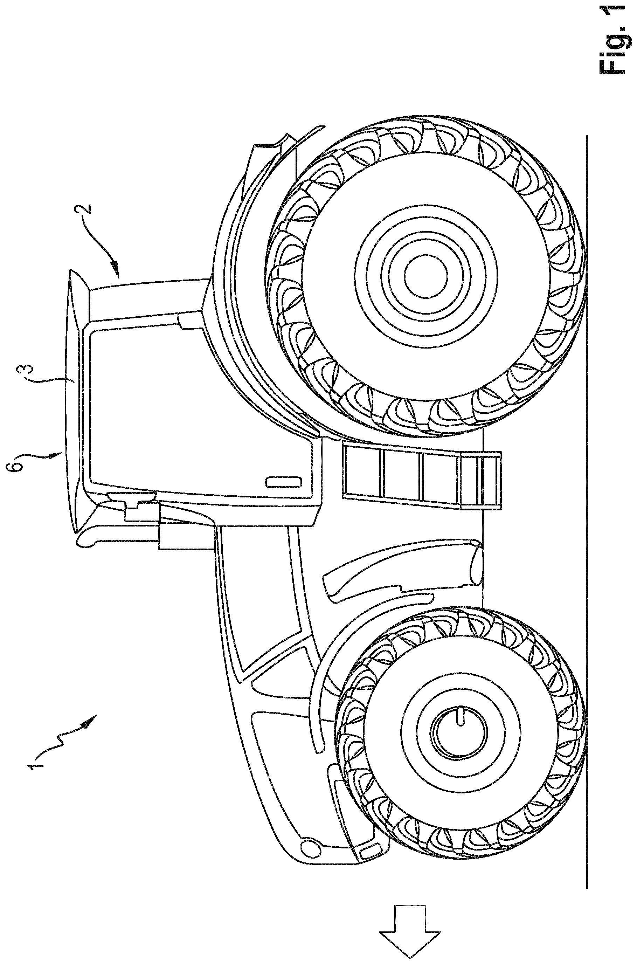

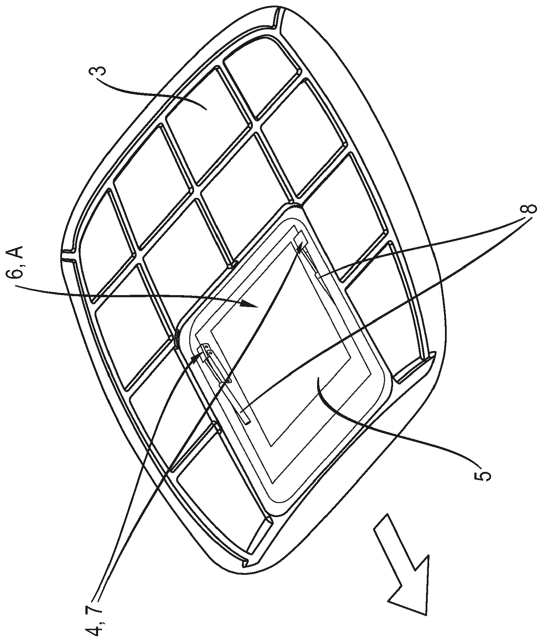

Fig. 1 zeigt ein landwirtschaftliches Fahrzeug in Form eines Traktors 1 in Seitenansicht von links, bezogen auf eine per Pfeil angedeutete Vorwärtsfahrtrichtung. Der Traktor 1 weist eine geschlossene Fahrerkabine 2 auf. Die Fahrerkabine 2 wird nach oben hin von einem Dach 3 abgeschlossen. In dem Dach 3 ist in einem vorderen mittigen Bereich eine Luke 6 ausgebildet, deren Position in der seitlichen Ansicht der Fig. 1 per Pfeil angedeutet ist. Die weiteren Fig. 2 bis 4 dienen der näheren Erläuterung des Bereichs der Luke 6, wo auch die Erfindung zum Einsatz kommt.

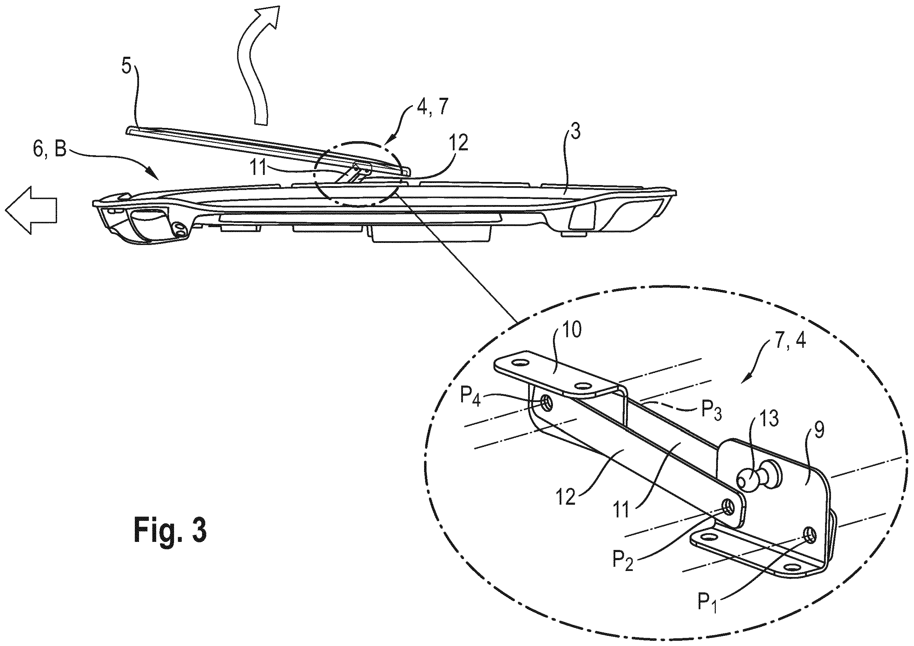

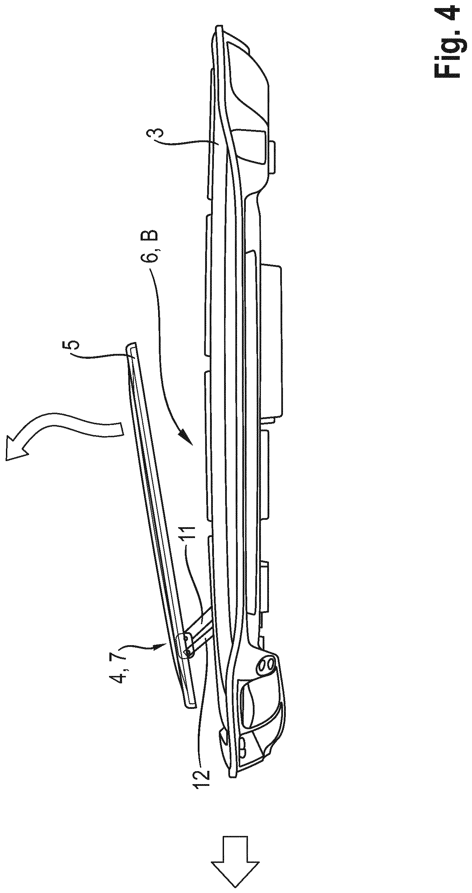

Fig. 2 zeigt nun das Dach 3 der in Fig. 1 gezeigten Kabine 2 zu Erläuterungszwecken in von der Kabine gelöster Darstellung. Die Vorwärtsrichtung (im Einbauzustand an die Kabine 2 bzw. den Traktor 1) ist - wie auch in den noch folgenden Fig. 3 und 4 mit einem geraden Pfeil angegeben. Das Dach 3 weist eine annähernd quadratische Grundform auf, jedoch mit leicht nach außen gewölbten Kanten. Zum Ablauf von Regenwasser können Regenablaufrinnen in das Dach 3 eingearbeitet sein. In einem vorderen mittigen Bereich des Dachs 3 ist eine etwa quadratische Luke 6 im Sinne einer Öffnung ausgebildet. Die Luke 6 wird durch ein sich vollständig darüber erstreckendes Abdeckelement 5 verschlossen, befindet sich in Fig. 2 somit in einem Schließzustand A. Eine vorteilhaft vorgesehene Dichtung (nicht eingezeichnet) verläuft zwischen den gebildeten Kontaktflächen des Abdeckelements 5 und des Dachs 3, beispielsweise also mit quadratischem Verlauf etwa unterhalb der Außenkanten des Abdeckelements 5.

Das Abdeckelement 5 ist aus transparentem Material wie Glas, vorzugsweise getönt, hergestellt und ermöglicht so einen zusätzlichen Lichteinfall in die Kabine auch im gezeigten geschlossenen Zustand A der Luke 6. Erfindungsgemäß ist das Abdeckelement 5 mittels eines Viergelenkmechanismus 4, der im Detail anhand der nachfolgenden Fig. 3 noch zu erläutern ist, gegenüber dem Dach 3 beweglich gelagert. Angedeutet ist bereits, dass der Viergelenkmechanismus 4 durch zwei an gegenüberliegenden Seiten der Luke 6 befindliche Scharniere 7 realisiert wird. Weiterhin ist zu sehen, dass eine zwischen Dach 3 und beweglichem Abdeckelement 5 wirkende Stützeinrichtung 8 vorgesehen ist. Diese umfasst eine in Zylinder-Kolbenanordnung gestaltete Gasfederanordnung und eignet sich zum Aufbringen einer der Gewichtskraft des Abdeckelements entgegenwirkenden Stützkraft. Mit anderen Worten, die Stützeinrichtung 8 dient als Kraftunterstützung beim Heben und Halten des Abdeckelements 5 aus dem gezeigten Schließzustand A in einen wie in Fig. 3 gezeigten Öffnungszustand b.

Fig. 3 zeigt nun das Dach 3 gemäß Fig. 2 im geöffneten Zustand B der Luke 6 in Seitenansicht von links, sowie eine Detaildarstellung eines darin eingebauten Scharniers 7. Wie zu sehen, ist das Abdeckelement 5 aus einem die Luke 6 nach oben verschließenden Zustand A in einen die Luke 6 nach oben freigebenden Öffnungszustand B bewegt worden. Das Abdeckelement 5 hat dabei eine besondere Bewegungsbahn zurückgelegt, die durch den geschwungenen Pfeil angedeutet ist. Die Bewegungsbahn zeichnet sich dadurch aus, dass das Abdeckelement 5 unmittelbar aus dem Schließzustand A zunächst in orthogonaler Richtung zur Fläche des Dachs 3 von diesem abhebt. Erst bei weiterer Auslenkung des Abdeckelements 5 aus dem Schließzustand A führt dieses dann auch eine Drehbewegung durch, um in den gezeigten geneigten Zustand B zu gelangen. Zur Realisierung dieser Bewegungsbahn dient ein Viergelenkmechanismus 4, der im gezeigten Ausführungsbeispiel durch Scharnieranordnungen 7 umgesetzt ist, die beidseitig der Luke 6 angeordnet sind und das Abdeckelement 5 mit dem Dach 3 verbinden.

Wie die Detailansicht der Fig. 3 zeigt, die ein einzelnes Scharnier 7 in perspektivischer Darstellung wiedergibt, umfasst der Viergelenkmechanismus 4 ein erstes Glied 11 und ein zweites Glied 12, die als nicht unmittelbar miteinander verbundene Streben ausgeführt sind. Die ersten und zweiten Glieder 11, 12 sind jeweils mit ihren dem Dach 3 zugewandten Enden an voneinander beabstandeten Drehpunkten P₁, P₂ mit dem Dach 3 verbunden, indem sie drehbar an einem dachfesten Lagerelement 9 gelagert sind, das wiederum am Dach 3 befestigbar ist.

Weiterhin sind die ersten und zweiten Glieder 11, 12 mit ihren dem Dach 3 (bzw. Lagerelement 9) abgewandten Enden jeweils an voneinander beabstandeten Drehpunkten P₃, P₄ mit dem Abdeckelement 5 verbunden, indem sie drehbar an einem Lagerelement 10 gelagert sind, an welchem wiederum das Abdeckelement 5 befestigbar ist.

Das gezeigte Scharnier 7 umfasst demnach im Wesentlichen ein Lagerelement 9, das am Dach 3 zu montieren und somit unbeweglich ist, ein erstes und zweites Glied 11, 12 sowie ein gegenüber dem dachfesten Lagerelement 9 mittels der ersten und zweiten Glieder 11, 12 beweglich gelagertes Lagerelement 10, welches das Abdeckelement 5 aufnimmt. Das dachfeste Lagerelement 9 ist mit dem beweglichen Lagerelement 10 in einer Ebene angeordnet, die zwischen dem ersten Glied 11 und dem zweiten Glied 12 liegt. Durch die so realisierte Sandwich-Bauweise erreicht das Scharnier 7 eine weitestgehend ausgewogene Kraftverteilung, d.h. es werden einseitige Belastungen der Lagerelemente 9, 10 vermieden oder zumindest gemindert.

Zur Erzielung der besonderen Bewegungsbahn des Abdeckelements 5 ist das erste Glied 11 des Scharniers 7 geringfügig länger ausgebildet als das zweite Glied 12 (bezogen auf die Abstände der jeweiligen Drehpunkte P₁ zu P₃ bzw. P₂ zu P₄). Im Schließzustand A der Luke 6 liegen die Glieder 11, 12 und auch das Abdeckelement 5 somit etwa parallel zur Fläche des Dachs 3, um die Luke 6 zu verschließen und einen möglichst geringen Raum zu beanspruchen. Bei einem Öffnen der Luke 6 hebt das Abdeckelement 5 zunächst in etwa orthogonaler Richtung (bezogen auf die Fläche des Dachs 3) nach oben ab. Aufgrund der geringfügig unterschiedlich großen Bewegungsradien des ersten Glieds 11 und des zweiten Glieds 12 wird mit zunehmendem Öffnungsgrad eine zunehmende Neigung des Abdeckelements 5 erzwungen, so dass das Abdeckelement 5 im vorderen Bereich stärker vom Dach 3 abhebt als im hinteren Bereich. Zur Begrenzung des Öffnungsgrads kann in das Scharnier 7 ein Anschlag 13 integriert sein, wie in der Detailansicht von Fig. 3 zu sehen. Auch können Arretierungsmittel (nicht dargestellt) vorgesehen sein, um das Abdeckelement 5 in einem gewünschten Zustand festzustellen.

In den Fig. 2 und 3 öffnet das gezeigte Sonnendach frontseitig, d.h. das Abdeckelement 5 hebt frontseitig stärker vom Dach 3 ab als heckseitig. Eine alternative Ausführungsform, die in Fig. 4 dargestellt ist, weist eine demgegenüber umgekehrte Anbringung der Scharniere 7 auf. Die Scharniere 7 sind dazu an einer anderen Position und um 180° umgekehrt am Dach 3 befestigt. Das Sonnendach öffnet demzufolge in umgekehrter Richtung, nämlich heckseitig. Auf vorteilhafte Weise lässt sich die Montage des Scharniers 7 von innerhalb der Fahrerkabine 2 durchführen, indem die Schraubstellen des dachfesten Lagerelements 9 des Scharniers 7 von innerhalb der Kabine 2 zugänglich sind. So lässt sich die Öffnungsrichtung des Sonnendachs auch nachträglich auf einfache Weise ändern. Ein Hinaufklettern auf das Kabinendach 2 - wie bei herkömmlicher Anbringungsweise von Dachscharnieren nötig - ist dabei nicht erforderlich.

Die beschriebene Erfindung eignet sich zum Einsatz an Fahrerkabinen landwirtschaftlicher Fahrzeuge aller Art. Zur Erzielung der genannten Vorteile und Wirkungen kann es sich auch um eine teilweise offen gestaltete (z.B. seitlich offene) Fahrerkabine handeln, die mit einem Dach versehen ist.

**Bezugszeichenliste**

| | | | |
|---|---|---|---|
| 1 | Traktor | P₁ | Drehpunkt |
| 2 | Fahrerkabine | P₂ | Drehpunkt |
| 3 | Dach | P₃ | Drehpunkt |
| 4 | Viergelenkmechanismus | P₄ | Drehpunkt |
| 5 | Abdeckelement | A | Schließzustand |
| 6 | Luke | B | Öffnungszustand |
| 7 | Scharnier | | |
| 8 | Gasfeder | | |
| 9 | dachfestes Lagerelement | | |
| 10 | bewegliches Lagerelement | | |
| 11 | erstes Glied | | |
| 12 | zweites Glied | | |
| 13 | Anschlag | | |

## Patentansprüche

1. Fahrerkabine (2) eines landwirtschaftlichen Fahrzeugs (1), mit einem eine Luke (6) aufweisenden Dach (3), wobei die Luke (6) mittels eines beweglich gegenüber dem Dach (3) gelagerten Abdeckelements (5) verschließbar ist, **dadurch gekennzeichnet, dass** das Abdeckelement (5) mittels eines Viergelenkmechanismus (4) gegenüber dem Dach (3) gelagert ist, wobei der Viergelenkmechanismus (4) ein erstes Glied (11) und ein zweites Glied (12) umfasst, wobei die ersten und zweiten Glieder (11, 12) jeweils mit deren dem Dach (3) zugewandten Enden an voneinander beabstandeten Drehpunkten (P1, P2) mit dem Dach (3) verbunden sind, und mit deren dem Dach (3) abgewandten Enden jeweils an voneinander beabstandeten Drehpunkten (P3, P4) mit dem Abdeckelement (5) verbunden sind, und das erste Glied (11) und das zweite Glied (12) eine unterschiedliche Länge aufweisen, so dass das Abdeckelement (5) im verschlossenen Zustand (A) etwa parallel zur Fläche des Dachs (3) ausgerichtet ist und im geöffneten Zustand (B) gegenüber der Fläche des Dachs (3) geneigt ist.

2. Fahrerkabine nach Anspruch 1, **dadurch gekennzeichnet, dass** das Abdeckelement (5) zwischen einem die Luke (6) verschließenden Schließzustand (A) und einem die Luke (6) freigebenden Öffnungszustand (B) bewegbar ist.

3. Fahrerkabine nach Anspruch 1, **dadurch gekennzeichnet, dass** die ersten und zweiten Glieder (11, 12) im Schließzustand (A) der Luke (6) annähernd parallel zur Fläche des Dachs (3) ausgerichtet sind, so dass das Abdeckelement (5) beim Öffnen der Luke (6) aus dem Schließzustand (A) zunächst etwa orthogonal von der Fläche des Dachs (3) abhebt.

4. Fahrerkabine nach einem der Ansprüche 1 bis 3, **dadurch gekennzeichnet, dass** das Abdeckelement (5) mittels zumindest einer Scharnieranordnung (7), die einen Viergelenkmechanismus (4) aufweist, mit dem Dach (3) verbunden ist.

5. Fahrerkabine nach Anspruch 4, **dadurch gekennzeichnet, dass** die zumindest eine Scharnieranordnung (7) derart unterhalb des Abdeckelements (5) angeordnet ist, dass diese zumindest im Schließzustand (A) der Luke (6) durch das Abdeckelement (5) vor Witterungseinflüssen geschützt ist.

6. Fahrerkabine nach Anspruch 4 oder 5, **dadurch gekennzeichnet, dass** die Scharnieranordnung (7) in unterschiedlichen Positionen, insbesondere umkehrbar an dem Dach (3) befestigbar ist.

7. Fahrerkabine nach einem der Ansprüche 4 bis 6, **dadurch gekennzeichnet, dass** die Scharnieranordnung (7) von innerhalb der Fahrerkabine (2) am Dach (3) montierbar, insbesondere daran verschraubbar ist.

8. Fahrerkabine nach einem der Ansprüche 1 bis 7, **dadurch gekennzeichnet, dass** eine zwischen Dach (3) und beweglichem Abdeckelement (5) wirkende Stützeinrichtung (8) vorgesehen ist, die zum Aufbringen einer der Gewichtskraft des Abdeckelements (5) entgegenwirkenden Stützkraft geeignet ist.

9. Fahrerkabine nach Anspruch 8, **dadurch gekennzeichnet, dass** die Stützeinrichtung (8) eine Federanordnung, insbesondere eine Gasfederanordnung, umfasst.

10. Fahrerkabine nach einem der Ansprüche 1 bis 9, **dadurch gekennzeichnet, dass** das Abdeckelement (5) zumindest teilweise aus lichtdurchlässigem Material hergestellt ist.

11. Landwirtschaftliches Fahrzeug, insbesondere Traktor (1), mit einer Fahrerkabine (2) gemäß einem der Ansprüche 1 bis 10.

## Claims

1. Driver's cab (2) of an agricultural vehicle (1), with a roof (3) having a hatch (6), wherein the hatch (6) can be closed by means of a covering element (5) mounted movable with respect to the roof (3), **characterized in that** the covering element (5) is mounted with respect to the roof (3) by means of a four-link mechanism (4), wherein the four-link mechanism (4) comprises a first member (11) and a second member (12), wherein the first and second members (11,12) are in each case connected to the roof (3) with their ends facing the roof (3) at pivot points (P1, P2) spaced apart from each other, and are connected to the covering element (5) with their ends facing away from the roof (3) in each case at pivot points (P3, P4) spaced apart from each other, and the first member (11) and the second member (12) have a different length, with the result that in the closed state (A) the covering element (5) is aligned approximately parallel to the surface of the roof (3) and in the open state (B) is inclined with respect to the surface of the roof (3).

2. Driver's cab according to claim 1, **characterized in that** the covering element (5) is movable between a closed state (A) closing the hatch (6) and an open state (B) uncovering the hatch (6).

3. Driver's cab according to claim 1, **characterized in that** in the closed state (A) of the hatch (6) the first and second members (11, 12) are aligned approximately parallel to the surface of the roof (3), with the result that when the hatch (6) is opened from the closed state (A) the covering element (5) initially lifts approximately orthogonally from the surface of the roof (3).

4. Driver's cab according to one of claims 1 to 3, **characterized in that** the covering element (5) is connected to the roof (3) by means of at least one hinge arrangement (7), which has a four-link mechanism (4).

5. Driver's cab according to claim 4, **characterized in that** the at least one hinge arrangement (7) is arranged underneath the covering element (5) in such a way that it is protected by the covering element (5) against the effects of the weather at least in the closed state (A) of the hatch (6).

6. Driver's cab according to claim 4 or 5, **characterized in that** the hinge arrangement (7) can be secured to the roof (3) in various positions, in particular reversibly.

7. Driver's cab according to one of claims 4 to 6, **characterized in that** the hinge arrangement (7) can be mounted on the roof (3) from inside the driver's cab (2), in particular can be screwed thereto.

8. Driver's cab according to one of claims 1 to 7, **characterized in that** a supporting device (8) acting between roof (3) and movable covering element (5) is provided, which is suitable for applying a supporting force counteracting the weight force of the covering element (5).

9. Driver's cab according to claim 8, **characterized in that** the supporting device (8) comprises a spring arrangement, in particular a gas spring arrangement.

10. Driver's cab according to one of claims 1 to 9, **characterized in that** the covering element (5) is at least partially produced from translucent material.

11. Agricultural vehicle, in particular tractor (1), with a driver's cab (2) according to one of claims 1 to 10.

## Revendications

1. Cabine de conduite (2) d'un véhicule agricole (1), comprenant un toit (3) pourvu d'une lucarne (6), la lucarne (6) étant fermante au moyen d'un élément de recouvrement (5) monté mobile par rapport au toit (3), **caractérisée en ce que** l'élément de recouvrement (5) est monté par rapport au toit au moyen d'un quadrilatère articulé (4), le quadrilatère articulé (4) comportant un premier élément (11) et un second élément (12), les premier et second éléments (11, 12) étant chacun reliés au toit (3) par leurs extrémités tournées vers le toit (3) au niveau de points de rotation (P1, P2) distants l'un de l'autre, et étant chacun reliés à l'élément de recouvrement (5) par leurs extrémités situées à l'opposé du toit (3) au niveau de points de rotation (P3, P4) distants l'un de l'autre, et le premier élément (11) et le second élément (12) présentant une longueur différente, de sorte que l'élément de recouvrement (5), dans la position fermée (A), est orienté sensiblement parallèlement à la surface du toit (3) et, dans la position ouverte (B) est incliné par rapport à la surface du toit (3).

2. Cabine de conduite selon la revendication 1, **caractérisée en ce que** l'élément de recouvrement (5) est mobile entre un état fermé (A) fermant la lucarne (6) et un état ouvert (B) dégageant la lucarne (6).

3. Cabine de conduite selon la revendication 1, **caractérisée en ce que**, à l'état fermé (A) de la lucarne (6), les premier et second éléments (11, 12) sont orientés sensiblement parallèlement à la surface du toit (3), de sorte que, lors de l'ouverture de la lucarne (6), l'élément de recouvrement (5) quitte l'état fermé (A) d'abord de manière sensiblement orthogonale à la surface du toit (3).

4. Cabine de conduite selon une des revendications 1 à 3, **caractérisée en ce que** l'élément de recouvrement (5) est relié au toit (3) au moyen d'au moins un agencement de charnière (7) qui comporte un quadrilatère articulé (4).

5. Cabine de conduite selon la revendication 4, **caractérisée en ce que** le au moins un agencement de charnière (7) est disposé au-dessous de l'élément de recouvrement (5), de façon que, au moins à l'état fermé (A) de la lucarne (6), il soit protégé contre les intempéries par l'élément de recouvrement (5).

6. Cabine de conduite selon la revendication 4 ou 5, **caractérisée en ce que** l'agencement de charnière (7) peut être fixé au toit (3) dans différentes positions, en particulier de manière inversible.

7. Cabine de conduite selon une des revendications 4 à 6, **caractérisée en ce que** l'agencement de charnière (7) peut être monté sur le toit (3), en particulier y être vissé, depuis l'intérieur de la cabine de conduite (2).

8. Cabine de conduite selon une des revendications 1 à 7, **caractérisée en ce qu'**il est prévu un équipement d'appui (8) qui agit entre le toit (3) et l'élément de recouvrement mobile (5) et qui est apte à exercer une force d'appui agissant à l'encontre du poids de l'élément de recouvrement (5) .

9. Cabine de conduite selon la revendication 8, **caractérisée en ce que** l'équipement d'appui (8) comporte un agencement de ressort, en particulier un agencement de ressort à gaz.

10. Cabine de conduite selon une des revendications 1 à 9, **caractérisée en ce que** l'élément de recouvrement (5) est fabriqué au moins en partie en matériau translucide.

11. Véhicule agricole, en particulier tracteur (1), comprenant une cabine de conduite (2) selon une des revendications 1 à 10.
